# EUROPEAN PATENT APPLICATION

(11) **EP 4 557 430 A1**
(43) Date of publication of application: **21.05.2025**
(21) Application number: 23865926.2
(22) Date of filing: 18.09.2023
(51) Int. Cl.: H01M 10/0562, C01B 25/14

(54) **METHOD FOR MANUFACTURING SOLID ELECTROLYTE, AND SOLID ELECTROLYTE**

(30) Priority: 16.09.2022 KR 20220117224
(71) Applicant: LG Chem, Ltd., Yeongdeungpo-gu Seoul 07336 (KR)
(72) Inventor: CHUNG, Ha Bin, Daejeon 34122 (KR); SON, Byoung Kuk, Daejeon 34122 (KR); PARK, Chang Hun, Daejeon 34122 (KR); KIM, In Gyu, Daejeon 34122 (KR); JEON, Do Yeon, Daejeon 34122 (KR); LEE, Dong Geon, Daejeon 34122 (KR)
(74) Representative: Plasseraud IP
(86) International application number: PCT/KR2023/014032
(87) International publication number: WO 2024/058633

(57) **Abstract**

The present invention relates to a method of preparing a solid electrolyte which includes steps of preparing a precursor mixture by mixing a sulfide-based solid electrolyte raw material and a solvent (S1) and performing a heat treatment on the precursor mixture (S2), wherein the solvent has a relative polarity to water of 0.15 or less, and an amount of the solvent is greater than 2 wt% and less than or equal to 5 wt% based on a total amount of the precursor mixture.

## Description

### TECHNICAL FIELD

### Cross-reference to Related Applications

This application claims priority from Korean Patent Application No. 10-2022-0117224, filed on September 16, 2022, the disclosure of which is incorporated by reference herein.

### Technical Field

The present invention relates to a method of preparing a solid electrolyte, which prevents adhesion of a sulfide-based solid electrolyte precursor and prevents non-uniform mixing, and the solid electrolyte.

### BACKGROUND ART

An all-solid-state battery is a battery which replaces a liquid electrolyte filling between a positive electrode and a negative electrode of a conventional lithium secondary battery with a solid, wherein, since it has higher energy density than the conventional battery while being safe as there is no risk of explosion, it is attracting attention as a next-generation battery. A solid electrolyte used in the all-solid-state battery is a material in a solid state which may conduct lithium ions in the battery, wherein it has high ionic conductivity comparable to that of an electrolyte solution currently used in the lithium secondary battery. Core materials constituting the solid electrolyte include a polymer, a sulfide, or an oxide, but, among them, a sulfide-based solid electrolyte with high ductility and ionic conductivity is evaluated as suitable for preparing a high-capacity large battery.

However, since the sulfide-based solid electrolyte is highly reactive to moisture, it has a problem in that it reacts with the moisture in the air to generate hydrogen sulfide, a harmful gas. Accordingly, the toxic hydrogen sulfide may not only adversely affect safety of workers, but may also reduce ionic conductivity of the sulfide-based solid electrolyte itself.

Also, in a case in which dry mixing is performed to synthesize a conventional sulfide solid electrolyte, problems may occur in which a precursor adheres to a container to cause non-uniform mixing and simultaneously reduce yield of the electrolyte, and, in a case in which wet mixing is performed by adding a large amount of solvent, the adhesion of the precursor may be prevented, but there is a problem in that the final product may not function as a normal solid electrolyte because it has relatively high electronic conductivity.

(Patent Document 001) KR 2018-0057423 A

### DISCLOSURE OF THE INVENTION

### TECHNICAL PROBLEM

An aspect of the present invention provides a method of preparing a solid electrolyte which improves yield of a sulfide-based solid electrolyte by preventing adhesion of a precursor and preventing non-uniform mixing by adding a trace amount of a low polar or non-polar solvent to the sulfide-based solid electrolyte precursor.

Another aspect of the present invention provides a solid electrolyte in which solid electrolyte precursors are uniformly mixed to reduce an amount of unreacted or side reaction impurities, increase ionic conductivity, and simultaneously reduce electronic conductivity.

### TECHNICAL SOLUTION

The present invention provides a method of preparing a solid electrolyte and the solid electrolyte.
(1) The present invention provides a method of preparing a solid electrolyte which includes steps of preparing a precursor mixture by mixing a sulfide-based solid electrolyte raw material and a solvent (S1) and performing a heat treatment on the precursor mixture (S2), wherein the solvent has a relative polarity to water of 0.15 or less, and an amount of the solvent is greater than 2 wt% and less than or equal to 5 wt% based on a total amount of the precursor mixture.
(2) The present invention provides the method of (1) above, wherein the solvent has a dielectric constant of 4.0 or less.
(3) The present invention provides the method of (1) or (2) above, wherein the solvent is at least one selected from the group consisting of xylene, benzene, toluene, pentane, hexane, and cyclohexane.
(4) The present invention provides the method of any one of (1) to (3) above, wherein the amount of the solvent is in a range of 2.5 wt% to 4 wt% based on the total amount of the precursor mixture.
(5) The present invention provides the method of any one of (1) to (4) above, wherein the solid electrolyte is a sulfide-based solid electrolyte having an argyrodite-type crystal structure.
(6) The present invention provides the method of any one of (1) to (5) above, wherein the sulfide-based solid electrolyte raw material includes a sulfur precursor, a phosphorus precursor, and a LiX precursor, wherein X is a halogen element.
(7) The present invention provides the method of any one of (1) to (6) above, wherein the sulfide-based solid electrolyte raw material includes Li₂S, P₂S₅, and LiX, wherein X is fluorine (F), chlorine (Cl), bromine (Br), or iodine (I).
(8) The present invention provides the method of any one of (1) to (7) above, wherein the step (S1) is performed by ball milling the sulfide-based solid electrolyte raw material and the solvent using a planetary mill containing two types of zirconia (Zr) balls having different average particle diameters.
(9) The present invention provides the method of any one of (1) to (8) above, wherein the precursor mixture prepared in the step (S1) is in a form of powder.
(10) The present invention provides the method of any one of (1) to (9) above, wherein a heat treatment temperature in the step (S2) is in a range of 350°C to 650°C.
(11) The present invention provides the method of any one of (1) to (10) above, wherein an adhesion ratio, which is calculated by Equation 1, of the precursor mixture heat-treated in the step (S2) is 1% or less.
   Adhesion ratio (%) = (an amount (g) of precursor mixture powder which adheres to an inner surface of a container after a milling process and does not fall when the container is turned upside down after taking off the precursor mixture powder by applying a force of 20 Kgf or less/a total amount (g) of the precursor mixture added into the container) × 100
(12) The present invention provides the method of any one of (1) to (11) above, wherein the solid electrolyte is represented by Formula 1.

   [Formula 1] LiₐM_{b}P_{c}S_{d}Aₑ

   In Formula 1,
   M is at least one element selected from the group consisting of silicon (Si), germanium (Ge), tin (Sn), aluminum (Al), zirconium (Zr), zinc (Zn), arsenic (As), gallium (Ga), antimony (Sb), niobium (Nb), vanadium (V), titanium (Ti), hafnium (Hf), magnesium (Mg), indium (In), copper (Cu), thallium (Tl), lead (Pb), tungsten (W), and nickel (Ni),
   A is at least one element selected from the group consisting of fluorine (F), chlorine (Cl), bromine (Br), and iodine (I), and
   5.5≤a≤7.0, 0≤b≤0.7, 0.3≤c≤1, 4≤d≤5.6, and 0.4≤e≤2.
(13) The present invention provides a solid electrolyte having a composition represented by Formula 1 and having a total impurity content of 1 wt% or less.

   [Formula 1] LiₐM_{b}P_{c}S_{d}Aₑ

   In Formula 1,
   M is at least one element selected from the group consisting of Si, Ge, Sn, Al, Zr, Zn, As, Ga, Sb, Nb, V, Ti, Hf, Mg, In, Cu, Tl, Pb, W, and Ni,
   A is at least one element selected from the group consisting of F, Cl, Br, and I, and
   5.5≤a≤7.0, 0≤b≤0.7, 0.3≤c≤1, 4≤d≤5.6, and 0.4≤e≤2.
(14) The present invention provides the solid electrolyte, wherein the solid electrolyte has an ionic conductivity of 5.0 mS/cm or more.
(15) The present invention provides the solid electrolyte, wherein the solid electrolyte has an electronic conductivity of 1.0×10⁻⁹ mS/cm to 5.0×10⁻⁶ mS/cm.

### ADVANTAGEOUS EFFECTS

According to a method of preparing a solid electrolyte of the present invention, generation of hydrogen sulfide gas, which has a negative effect on the human body, may be prevented during a solid electrolyte preparation process by using a low polar or non-polar solvent that does not cause a side reaction with a sulfide solid electrolyte precursor.

Also, the method of preparing a solid electrolyte of the present invention may prevent adhesion of the precursor, may prevent a resulting decrease in yield, and may alleviate non-uniform mixing and grinding of the precursor by using a trace amount of the low polar or non-polar solvent during a precursor mixture preparation process.

Furthermore, since the method of preparing a solid electrolyte of the present invention may decrease crystallinity of precursor particles and may reduce a gap between the particles during a heat treatment process by uniform grinding and mixing of precursor powder, reactivity of solid electrolyte phase formation may be increased to reduce a phase synthesis temperature during the heat treatment, and, accordingly, a solid electrolyte with reduced impurities and increased ionic conductivity may be provided.

In addition, since an amount of unreacted or side reaction impurities in the solid electrolyte of the present invention is significantly reduced to increase ionic conductivity and decrease electronic conductivity, the solid electrolyte of the present invention may improve performance characteristics when it is used in an all-solid-state battery.

### BRIEF DESCRIPTION OF THE DRAWINGS

FIG. 1 is a schematic view illustrating a sequence of a method of preparing a solid electrolyte of the present invention.
FIG. 2 is photographs showing a state of a solid electrolyte present in a container after preparation of the solid electrolyte and a state of the solid electrolyte when transferred to a storage container after the preparation of the solid electrolyte for Example 1 and Comparative Example 1.

### MODE FOR CARRYING OUT THE INVENTION

Hereinafter, the present invention will be described in more detail to allow for a clearer understanding of the present invention. In this case, it will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

The terminology used herein is for the purpose of describing particular example embodiments only and is not intended to be limiting of the present invention. In the specification, the terms of a singular form may include plural forms unless referred to the contrary.

It will be further understood that the terms "include," "comprise," or "have" when used in this specification, specify the presence of stated features, numbers, steps, elements, or combinations thereof, but do not preclude the presence or addition of one or more other features, numbers, steps, elements, or combinations thereof.

The expression 'All Solid State Battery' used in this specification means a battery in which all components of the battery are solid, wherein it is distinguished from a liquid electrolyte secondary battery using a liquid electrolyte, such as an electrolyte solution, and a gel polymer secondary battery using a liquid electrolyte together while using a polymer electrolyte instead of a separator.

### Method of Preparing Solid Electrolyte

A method of preparing a solid electrolyte according to the present invention includes the steps of preparing a precursor mixture by mixing a sulfide-based solid electrolyte raw material and a solvent (S1) and performing a heat treatment on the precursor mixture (S2). Also, the solvent has a relative polarity to water of 0.15 or less, and an amount of the solvent may be greater than 2 wt% and less than or equal to 5 wt% based on a total amount of the precursor mixture.

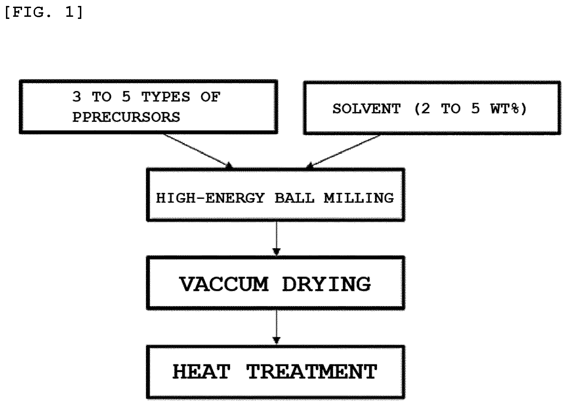

FIG. 1 illustrates a schematic view according to the method of preparing a solid electrolyte of the present invention. Referring to FIG. 1, step (S1) may be performed by preparing a precursor mixture through a process of mixing a powdered precursor of a sulfide-based solid electrolyte and a small amount of a solvent with a relative polarity to water of 0.15 or less and ball milling it with a planetary mill.

According to an embodiment of the present invention, the solvent may be at least one selected from the group consisting of xylene, benzene, toluene, pentane, hexane, and cyclohexane. The solvent means a solvent that has a relative polarity to water of 0.15 or less, whereinthe relative polarity refers to relative polarity of the solvent to water when polarity of water is set to be 1. That is, the solvent with a relative polarity to water of 0.15 or less means a low polar or non-polar solvent with low relative polarity to water. The relative polarity to water may be 0.15 or less, 0.13 or less, 0.11 or less, 0.10 or less, and 0.08 or less. During a process of preparing the sulfide-based solid electrolyte, since the sulfide-based solid electrolyte raw material has high reactivity with moisture, it may generate hydrogen sulfide, a harmful gas, when mixed with a polar solvent, wherein the method of preparing a solid electrolyte of the present invention may suppress the generation of the hydrogen sulfide gas because a side reaction with the sulfide-based solid electrolyte precursor does not occur by mixing with a solvent with low relative polarity to water. More specifically, in the method of preparing a solid electrolyte of the present invention, xylene or hexane may be included as the solvent.

Also, according to an embodiment of the present invention, the solvent may have a dielectric constant of 4.0 or less. The dielectric constant of the solvent may be 4.0 or less, 3.5 or less, 3.0 or less, 2.5 or less, 2.3 or less, 2.1 or less, 2.0 or less, and 1.9 or less. In a case in which the dielectric constant of the solvent satisfies the above range, since the solvent is close to being low polar or non-polar and does not cause the side reaction with the precursor during the preparation of the solid electrolyte, the generation of the hydrogen sulfide gas may be suppressed.

Furthermore, according to an embodiment of the present invention, an amount of the solvent may be greater than 2 wt% and less than or equal to 5 wt% based on a total amount of the sulfide-based solid electrolyte precursor mixture. Specifically, the amount of the solvent may be greater than 2 wt%, 2.1 wt% or more, 2.5 wt% or more, 3 wt% or more, 5 wt% or less, 4.5 wt% or less, 4 wt% or less, and 3.5 wt% or less based on the total amount of the sulfide-based solid electrolyte precursor mixture. In a case in which the amount of the solvent is outside a lower limit of the above numerical range, a problem of adhesion of the precursor, which occurs during the solid electrolyte preparation process, may not be solved. Also, it is desirable that the solid electrolyte has characteristics of low electronic conductivity and high ionic conductivity, wherein, in a case in which the amount of the solvent is outside an upper limit of the above numerical range, since a remaining amount of carbon generated from the solvent is increased and the electronic conductivity of the solid electrolyte after a drying process and a heat treatment process is increased due to the remaining amount of the carbon, a problem in the role of the solid electrolyte, which conducts only lithium ions and prevents movement of electrons, may occur. Specifically, if the electronic conductivity of the solid electrolyte increases, a side reaction with a positive electrode material may be increased in an electrode layer, current efficiency may be decreased in a solid electrolyte layer, and problems, such as self-discharge or a short circuit, may occur.

According to an embodiment of the present invention, the sulfide-based solid electrolyte raw material of the method of preparing a solid electrolyte of the present invention may include a sulfur precursor, a phosphorus precursor, and a LiX precursor, wherein X may be a halogen element. Specifically, the sulfide-based solid electrolyte raw material includes Li₂S, P₂S₅, and LiX, wherein X may be fluorine (F), chlorine (Cl), bromine (Br), or iodine (I).

Also, according to an embodiment of the present invention, the sulfide-based solid electrolyte may contain a lithium element, a phosphorus element, a sulfur element, and a halogen element, and may have an argyrodite-type crystal structure. Since sulfide ions contained in the sulfide-based solid electrolyte have a large ionic radius, a gap between anions, which becomes a path for ionic conduction, is wide and lithium ions may be easily moved as a binding force to the lithium ions is weakened due to high polarizability of the sulfide ions, and thus, lithium ion conductivity may be improved.

Furthermore, the sulfide-based solid electrolyte of the present invention may have an argyrodite-type crystal structure in terms of high ionic conductivity and low reactivity with a lithium negative electrode. That the sulfide-based solid electrolyte has an argyrodite-type crystal structure means that the sulfide-based solid electrolyte has at least a crystal phase of an argyrodite-type structure as a main phase. In this case, the main phase refers to a phase with the largest ratio to a total amount of all crystal phases constituting the sulfide solid electrolyte. Thus, a content ratio of the crystal phase of the argyrodite-type structure included in the sulfide-based solid electrolyte is preferably 80 wt% or more and may more preferably be 85 wt% or more, 90 wt% or more, and 95 wt% or more based on total crystal phases constituting the sulfide-based solid electrolyte.

Also, the sulfide-based solid electrolyte may be represented by Formula 1 below.

[Formula 1] LiₐM_{b}P_{c}S_{d}Aₑ

In Formula 1,
M is at least one element selected from the group consisting of silicon (Si), germanium (Ge), tin (Sn), aluminum (Al), zirconium (Zr), zinc (Zn), arsenic (As), gallium (Ga), antimony (Sb), niobium (Nb), vanadium (V), titanium (Ti), hafnium (Hf), magnesium (Mg), indium (In), copper (Cu), thallium (Tl), lead (Pb), tungsten (W), and nickel (Ni),
A is at least one element selected from the group consisting of fluorine (F), chlorine (Cl), bromine (Br), and iodine (I), and
5.5≤a≤7.0, 0≤b≤0.7, 0.3≤c≤1, 4≤d≤5.6, and 0.4≤e≤2.

In general, if high-energy milling is performed to mix and grind powder, a phenomenon may occur in which the powder is atomized and adheres to a wall, wherein, particularly, with respect to the sulfide-based solid electrolyte having the argyrodite-type crystal structure, a problem may occur in which powder non-uniformly and firmly adheres to a wall before uniform mixing and atomization due to the LiX precursor. A key to a solid-phase reaction, which proceeds through a heat treatment process during the solid electrolyte preparation process, is to atomize and uniformly mix the precursors, and a solid electrolyte having low impurities and a uniform composition may be prepared only when the precursors are atomized and uniformly mixed. In contrast, in a case in which the solid electrolyte is prepared by non-uniform mixing due to the adhesion of the precursor powder, purity and performance of the solid electrolyte may be adversely affected.

Thus, the method of preparing a solid electrolyte of the present invention may efficiently suppress the adhesion phenomenon by adding and mixing a trace amount of the solvent with a relative polarity to water of 0.15 or less together in the process of preparing the sulfide-based solid electrolyte having the argyrodite-type crystal structure and may provide an effect capable of improving the ionic conductivity of the prepared solid electrolyte.

According to an embodiment of the present invention, step (S1) may be performed by ball milling the sulfide-based solid electrolyte raw material and the solvent with a relative polarity to water of 0.15 or less using a planetary mill containing two types of zirconia (Zr) balls having different average particle diameters. Specifically, step (S1) may be performed by adding a sulfur precursor, a phosphorus precursor, and a LiX precursor, as the sulfide-based solid electrolyte raw material, into a zirconia container, and through stirring and ball milling by adding two or more types of ZrO₂ balls having different average particle diameters. Also, the precursor mixture prepared in step (S1) may be in a form of powder.

In a case in which a solid electrolyte is prepared by wet mixing through slurrying or liquefaction, since a portion of a solvent remains in a carbonized state in a precursor mixture or the solid electrolyte even if a drying or heat treatment process is performed, a problem occurs in which electronic conductivity is increased. Thus, since the method of preparing a solid electrolyte according to the present invention prevents the adhesion by dry mixing the sulfide-based solid electrolyte precursors in the form of powder and adding a trace amount of the solvent with a relative polarity to water of 0.15 or less, it may induce uniform mixing and may maximize the ionic conductivity of the prepared solid electrolyte.

During the ball milling using the planetary mill, the faster the stirring speed is, the faster the formation rate of the solid electrolyte precursor mixture is and the smaller the particle size is, and the longer the stirring time is, the higher the conversion rate to the uniformly mixed solid electrolyte precursor mixture is. The stirring time may be 3 hours or more, 6 hours or more, 8 hours or more, 10 hours or more, 12 hours or more, 14 hours or more, and 24 hours or more, and the stirring speed may be 300 rpm or more, 400 rpm or more, 500 rpm or more, 600 rpm or more, 700 rpm or more, and 800 rpm or more.

According to an embodiment of the present invention, a heat treatment temperature in step (S2), after step (S1), may be in a range of 350°C to 650°C. More specifically, the heat treatment temperature may be 300°C or higher, 350°C or higher, 450°C or higher, 500°C or higher, 650°C or less, 600°C or less, and 550°C or less. In a case in which the heat treatment temperature is within the above range, an argyrodite phase may be formed from the precursor mixture. Particularly, in a case in which high-energy milling at 600 rpm or more is performed in step (S1), the amorphous precursor mixture in the form of powder may be crystallized into an argyrodite solid electrolyte through the heat treatment process.

Also, before performing the heat treatment process, a step of drying the amorphous precursor mixture in the form of powder may be further performed. This is to remove the solvent remaining in the uniformly mixed precursor mixture, wherein vacuum drying, heat drying, or heat drying under vacuum conditions may be performed at room temperature to 200°C or less for 1 minute to 10 hours. Specifically, vacuum drying may be performed at a temperature of 80°C for 1 hour using a vacuum oven.

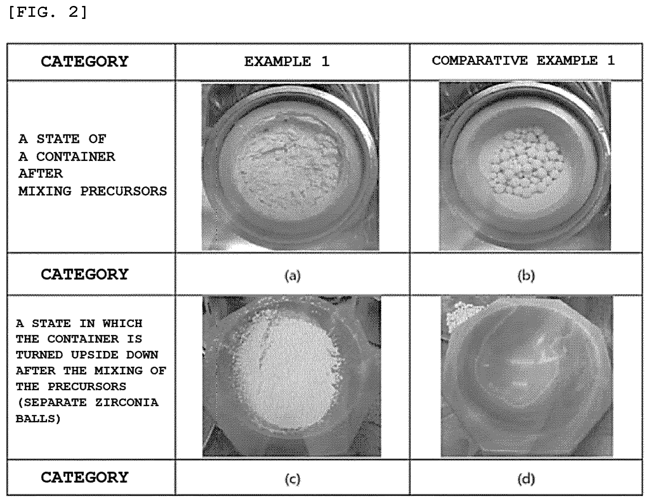

FIG. 2 is photographs showing a state of the solid electrolyte present in the container immediately after the preparation of the solid electrolyte and a state of the solid electrolyte when the prepared solid electrolyte was transferred to a storage container for Example 1 and Comparative Example 1. Specifically, FIG. 2 (a) shows the state of the solid electrolyte present in the container, as a reactor, immediately after the preparation of the solid electrolyte of Example 1, wherein it may be confirmed that the solid electrolyte is mixed and exists as uniform powder, and the zirconia balls used are buried in the powder. FIG. 2 (b) shows the state of the solid electrolyte present in the container, as a reactor, immediately after the preparation of the solid electrolyte of Comparative Example 1, wherein it may be confirmed that powder adheres to a container wall and the zirconia balls located in the center of the container. Also, FIG. 2 (c) shows the state of the solid electrolyte of Example 1 in which the container is turned upside down and the solid electrolyte powder is transferred to the storage container immediately after the preparation of the solid electrolyte of Example 1 and the zirconia balls are separated, wherein it may be confirmed that the solid electrolyte powder does not adhere to the container and is transferred well to the storage container. Furthermore, FIG. 2 (d) shows a state of the storage container in which the solid electrolyte of Comparative Example 1 is transferred to the storage container by turning the container upside down immediately after the preparation and the zirconia balls are separated, wherein it shows that, since the solid electrolyte powder adheres to the container wall and the zirconia balls, the solid electrolyte powder is not transferred to the storage container.

In an embodiment of the present invention, an adhesion ratio, which is calculated by Equation 1 below, of the precursor mixture heat-treated in step (S2) may be 1% or less. Adhesion ratio (%) = (an amount (g) of precursor mixture powder which adheres to an inner surface of a container after a milling process and does not fall when the container is turned upside down after taking off the precursor mixture powder by applying a force of 20 Kgf or less/a total amount (g) of the precursor mixture added into the container) × 100

The force applied in Equation 1 refers to the instantaneous maximum force applied to the container when using a tool, such as a laboratory spoon, a chisel, or a rubber mallet, or a power tool. The container may be damaged if the force is greater than 20 Kgf. Also, in Equation 1, the milling process may be a ball milling process using a planetary mill, and may be performed within the above-described stirring time and stirring speed ranges. Furthermore, the container may be one selected from the group consisting of a zirconia container, an agate container, an alumina container, a silicon nitride container, and a tungsten carbide container.

According to the method of preparing a solid electrolyte of the present invention, in a case in which the solvent is added in a certain amount and the mixing is performed using the planetary mill, since the adhesion ratio of the precursor mixture according to Equation 1 is 1% or less, obtaining difficulty may be reduced, yield may be increased, and the ionic conductivity of the prepared solid electrolyte may be improved. Specifically, the adhesion ratio may be 1% or less, 0.8% or less, 0.6% or less, 0.5% or less, 0.3% or less, 0.2% or less, and 0.1% or less.

### Solid Electrolyte

The present invention provides a solid electrolyte having a composition represented by the following Formula 1 and having a total impurity content of 1 wt% or less. The solid electrolyte according to the present invention may be prepared according to various methods of preparing a solid electrolyte, and the method of preparing a solid electrolyte, which has been described above in this specification, may be an example among the various methods of preparing a solid electrolyte.

[Formula 1] LiₐM_{b}P_{c}S_{d}Aₑ

In Formula 1,
M is at least one element selected from the group consisting of Si, Ge, Sn, Al, Zr, Zn, As, Ga, Sb, Nb, V, Ti, Hf, Mg, In, Cu, Tl, Pb, W, and Ni,
A is at least one element selected from the group consisting of F, Cl, Br, and I, and
5.5≤a≤7.0, 0≤b≤0.7, 0.3≤c≤1, 4≤d≤5.6, and 0.4≤e≤2.

According to the present invention, the solid electrolyte may be a sulfide-based solid electrolyte, and specifically, may be a sulfide-based solid electrolyte having an argyrodite-type crystal structure.

Also, the impurities may include an unreacted product that did not react during the preparation of the solid electrolyte or a side reaction product generated by a side reaction. Specifically, the impurities may be Li₂S or LiA. A in the impurities may be at least one element selected from the group consisting of F, Cl, Br, and I. A content of the impurities may be obtained by analyzing X-ray diffraction (XRD) data of the solid electrolyte powder using a Rietveld refinement program.

The total content of the impurities may be 1 wt% or less. The content of the impurities is based on 100 wt% of the solid electrolyte. Exemplarily, the content of the impurities may be 1.0 wt% or less, 0.9 wt% or less, 0.8 wt% or less, 0.7 wt% or less, 0.6 wt% or less, 0.5 wt% or less, 0.4 wt% or less, 0.3 wt% or less, 0.2 wt% or less, or 0.1 wt% or less. In a case in which the content of the impurities satisfies the above range, it may be confirmed that the precursors are atomized and uniformly mixed, and a solid electrolyte having a desired uniform composition may be obtained. Also, the solid electrolyte prepared by uniform mixing may have high ionic conductivity and low electronic conductivity, and excellent performance characteristics may be obtained when the solid electrolyte is used in an all-solid-state battery.

According to an embodiment of the present invention, the solid electrolyte may have an ionic conductivity of 5.0 mS/cm or more. Exemplarily, the ionic conductivity may be 5.0 mS/cm or more, 5.1 mS/cm or more, 5.3 mS/cm or more, 5.5 mS/cm or more, 5.7 mS/cm or more, 5.9 mS/cm or more, 6.0 mS/cm or more, 6.1 mS/cm or more, or 6.2 mS/cm or more, and, specifically, the ionic conductivity of the solid electrolyte may be 5.9 mS/cm or more.

Also, the solid electrolyte may have an electronic conductivity of 1.0×10⁻⁹ mS/cm to 5.0×10⁻⁶ mS/cm. Exemplarily, the solid electrolyte may have an electronic conductivity of 1.0×10⁻⁹ mS/cm or more, 2.0×10⁻⁹ mS/cm or more, 5.0×10⁻⁹ mS/cm or more, 7.0×10⁻⁹ mS/cm or more, 9.0×10⁻⁹ mS/cm or more, 1.0×10⁻⁸ mS/cm or more, 2.0×10⁻⁸ mS/cm or more, 5.0×10⁻⁸ mS/cm or more, 7.0×10⁻⁸ mS/cm or more, 9.0×10⁻⁸ mS/cm or more, 1.0×10⁻⁷ mS/cm or more, 1.1×10⁻⁷ mS/cm or more, 1.3×10⁻⁷ mS/cm or more, 1.5×10⁻⁷ mS/cm or more, 1.6×10⁻⁷ mS/cm or more, 5.0×10⁻⁶ mS/cm or less, 3.0×10⁻⁶ mS/cm or less, 1.0×10⁻⁶ mS/cm or less, 7.0×10⁻⁷ mS/cm or less, 5.0×10⁻⁷ mS/cm or less, 3.0×10⁻⁷ mS/cm or less, 2.9×10⁻⁷ mS/cm or less, 2.8×10⁻⁷ mS/cm or less, 2.7×10⁻⁷ mS/cm or less, and 2.6×10⁻⁷ mS/cm or less, and, specifically, the electronic conductivity of the solid electrolyte may be in a range of 1.3×10⁻⁷ mS/cm to 2.7×10⁻⁷ mS/cm. The solid electrolyte of the present invention may simultaneously satisfy the ionic conductivity and electronic conductivity ranges, and, in a case in which it satisfies the ionic conductivity and electronic conductivity ranges, since it blocks the movement of electrons and smoothly transfers lithium ions, an all-solid-state battery with excellent initial efficiency, life characteristics, and output characteristics may be provided.

### All-Solid-State Battery

The present invention provides an all-solid-state battery including the above solid electrolyte.

According to an embodiment of the present invention, the all-solid-state battery includes a positive electrode, a negative electrode (or anode-less), and a solid electrolyte layer including the solid electrolyte which is disposed between the positive electrode and the negative electrode. Since the all-solid-state battery according to the present invention has a small decrease in ionic conductivity and has low electronic conductivity of the included solid electrolyte, initial efficiency, life characteristics, and output characteristics of the all-solid-state battery may be excellent. In this case, the all-solid-state battery of the present invention may be prepared according to a typical method known in the art. For example, the all-solid-state battery of the present invention may be prepared by stacking and pressing such that the solid electrolyte layer exists between the positive electrode and the negative electrode.

### (1) Positive Electrode

The positive electrode may be prepared by coating a positive electrode current collector with a slurry for a positive electrode which includes a positive electrode active material, a binder, a conductive agent, and a solvent.

The positive electrode current collector is not particularly limited so long as it has conductivity without causing adverse chemical changes in the battery, and, for example, stainless steel, aluminum, nickel, titanium, fired carbon, or aluminum or stainless steel that is surface-treated with one of carbon, nickel, titanium, silver, or the like may be used. Also, microscopic irregularities may be formed on its surface to improve bonding strength with the positive electrode active material, and the positive electrode current collector may be used in various shapes such as that of a film, a sheet, a foil, a net, a porous body, a foam body, a nonwoven fabric body, and the like.

The positive electrode active material is a compound capable of reversibly intercalating and deintercalating lithium, wherein the positive electrode active material may specifically include a lithium metal oxide including lithium and at least one metal such as cobalt, manganese, nickel, or aluminum. More specifically, the lithium metal oxide may include lithium-manganese-based oxide (e.g., LiMnO₂, LiMn₂O₄, etc.), lithium-cobalt-based oxide (e.g., LiCoO₂, etc.), lithium-nickel-based oxide (e.g., LiNiO₂, etc.), lithium-nickel-manganese-based oxide (e.g., LiNi_{1-Y}Mn_{Y}O₂ (where 0<Y<1), LiMn_{2-Z}Ni_{z}O₄ (where 0<Z<2), etc.), lithium-nickel-cobalt-based oxide (e.g., LiNi_{1-Y1}Co_{Y1}O₂ (where 0<Y1<1), etc.), lithium-manganese-cobalt-based oxide (e.g., LiCo_{1-Y2}Mn_{Y2}O₂ (where 0<Y2<1), LiMn_{2-Z1}Co_{z1}O₄ (where 0<Z1<2), etc.), lithium-nickel-manganese-cobalt-based oxide (e.g., Li(NiₚCo_{q}Mnᵣ₁)O₂ (where 0<p<1, 0<q<1, 0<r1<1, and p+q+r1=1) or Li(Niₚ₁Co_{q1}Mnᵣ₂)O₄ (where 0<p1<2, 0<q1<2, 0<r2<2, and p1+q1+r2=2), etc.), or lithium-nickel-cobalt-transition metal (M) oxide (e.g., Li(Niₚ₂Co_{q2}Mnᵣ₃M_{S2})O₂ (where M is selected from the group consisting of aluminum (Al), iron (Fe), vanadium (V), chromium (Cr), titanium (Ti), tantalum (Ta), magnesium (Mg), and molybdenum (Mo), and p2, q2, r3, and s2 are atomic fractions of each independent elements, wherein 0<p2<1, 0<q2<1, 0<r3<1, 0<s2<1, and p2+q2+r3+s2=1), etc.), and any one thereof or a m ixture of two or more thereof may be included.

Among these materials, in terms of the improvement of capacity characteristics and stability of the battery, the lithium metal oxide may be LiCoO₂, LiMnO₂, LiNiO₂, lithium nickel manganese cobalt oxide (e.g., Li(Ni_{1/3}Mn_{1/3}CO_{1/3})O₂, Li(Ni_{0.6}Mn_{0.2}Co_{0.2})O₂, Li(Ni_{0.5}Mn_{0.3}Co_{0.2})O₂, Li(Ni_{0.7}Mn_{0.15}Co_{0.15})O₂, and Li(Ni_{0.8}Mn_{0.1}Co_{0.1})O₂, etc.), or lithium nickel cobalt aluminum oxide (e.g., LiNi_{0.8}Co_{0.15}Al_{0.05}O₂, etc.), and, in consideration of a significant improvement effect due to the control of types and content ratios of elements constituting the lithium composite metal oxide, the lithium composite metal oxide may be Li(Ni_{0.6}Mn_{0.2}Co_{0.2})O₂, Li(Ni_{0.5}Mn_{0.3}Co_{0.2})O₂, Li(Ni_{0.7}Mn_{0.15}Co_{0.15})O₂, and Li(Ni_{0.8}Mn_{0.1}Co_{0.1})O₂, and any one thereof or a mixture of two or more thereof may be used.

The positive electrode active material may be included in an amount of 60 wt% or more, 70 wt% or more, and 80 wt% or more, or 99 wt% or less, and 98 wt% or less based on a total weight of solid content excluding the solvent in the slurry for a positive electrode.

The binder is a component that assists in the binding between the conductive agent, the active material, and the current collector. Examples of the binder may be polyvinylidene fluoride, polyvinyl alcohol, carboxymethylcellulose, starch, hydroxypropylcellulose, regenerated cellulose, polyvinylpyrrolidone, poly tetrafluoroethylene, polyethylene, polypropylene, an ethylene-propylene-diene monomer, a sulfonated ethylene-propylene-diene monomer, a styrene-butadiene rubber, a fluoro rubber, or various copolymers thereof.

The binder may commonly be included in an amount of 1 wt% to 20 wt%, preferably 1 wt% to 15 wt%, and more preferably 1 wt% to 10 wt% based on the total weight of the solid content excluding the solvent in the slurry for a positive electrode.

The conductive agent is a component for further improving conductivity of the positive electrode active material.

The conductive agent is not particularly limited as long as it has conductivity without causing adverse chemical changes in the battery, and, for example, a conductive material, such as: graphite; a carbon-based material such as carbon black, acetylene black, Ketjen black, channel black, furnace black, lamp black, or thermal black; conductive fibers such as carbon fibers or metal fibers; metal powder such as fluorocarbon powder, aluminum powder, and nickel powder; conductive whiskers such as zinc oxide whiskers and potassium titanate whiskers; conductive metal oxide such as titanium oxide; or polyphenylene derivatives, may be used.

The conductive agent may commonly be included in an amount of 1 wt% or more, 20 wt% or less, 15 wt% or less, and 10 wt% or less based on the total weight of the solid content excluding the solvent in the slurry for a positive electrode.

The solvent may include an organic solvent, such as N-methyl-2-pyrrolidone (NMP), and may be used in an amount such that desirable viscosity is obtained when the positive electrode active material as well as optionally the binder and the conductive agent is included. For example, the solvent may be included in an amount such that a concentration of the solid content including the positive electrode active material as well as optionally the binder and the conductive agent is 50 wt% or more, 60 wt% or more, 70 wt% or more, 95 wt% or less, 90 wt% or less, and 85 wt% or less.

### (2) Negative Electrode

The negative electrode, for example, may be prepared by coating a slurry for a negative electrode, which includes a negative electrode active material, a binder, a conductive agent, and a solvent, on a negative electrode current collector, or a graphite electrode formed of carbon (C) or a lithium metal having a thickness of 50 µm or less itself may be used as the negative electrode, or, as anode-less, the negative electrode may be excluded.

For example, in a case in which the negative electrode is prepared by coating the slurry for a negative electrode on the negative electrode current collector, the negative electrode current collector generally has a thickness of 3 µm to 500 µm. The negative electrode current collector is not particularly limited so long as it has high conductivity without causing adverse chemical changes in the battery, and, for example, copper, stainless steel, aluminum, nickel, titanium, fired carbon, copper or stainless steel that is surface-treated with one of carbon, nickel, titanium, silver, or the like, an aluminum-cadmium alloy, or the like may be used. Also, similar to the positive electrode current collector, the negative electrode current collector may have fine surface roughness to improve bonding strength with the negative electrode active material, and the negative electrode current collector may be used in various shapes such as a film, a sheet, a foil, a net, a porous body, a foam body, a nonwoven fabric body, and the like.

The negative electrode active material may include at least one negative electrode active material selected from the group consisting of natural graphite, artificial graphite, a carbonaceous material; lithium-containing titanium composite oxide (LTO), Si, SiOₓ, metals (Me) such as Sn, lithium (Li), Zn, Mg, cadmium (Cd), cerium (Ce), Ni, or Fe; alloys composed of the metals (Me); oxides (MeOₓ) of the metals (Me); and composites of the metals (Me) and carbon. A silicon-based negative electrode active material including silicon (Si), silicon oxide (SiOₓ), or a silicon alloy may specifically be used as the negative electrode active material. In this case, since a thin and stable SEI layer containing a siloxane bond is formed, the high-temperature stability and life characteristics of the battery may be further improved.

The negative electrode active material may be included in an amount of 60 wt% or more, 70 wt% or more, 80 wt% or more, 99 wt% or less, and 98 wt% or less based on a total weight of solid content excluding the solvent in the slurry for a negative electrode.

The binder is a component that assists in the binding between the conductive agent, the active material, and the current collector. Examples of the binder may be polyvinylidene fluoride, polyvinyl alcohol, carboxymethylcellulose, starch, hydroxypropylcellulose, regenerated cellulose, polyvinylpyrrolidone, poly tetrafluoroethylene, polyethylene, polypropylene, an ethylene-propylene-diene monomer, a sulfonated ethylene-propylene-diene monomer, a styrene-butadiene rubber, a fluoro rubber, or various copolymers thereof.

The binder may be commonly included in an amount of 1 wt% or more, 20 wt% or less, 15 wt% or less, and 10 wt% or less based on the total weight of the solid content excluding the solvent in the slurry for a negative electrode.

The conductive agent is a component for further improving conductivity of the negative electrode active material. The conductive agent is not particularly limited as long as it has conductivity without causing adverse chemical changes in the battery, and, for example, a conductive material, such as: graphite such as natural graphite or artificial graphite; carbon black such as acetylene black, Ketjen black, channel black, furnace black, lamp black, and thermal black; conductive fibers such as carbon fibers or metal fibers; metal powder such as fluorocarbon powder, aluminum powder, and nickel powder; conductive whiskers such as zinc oxide whiskers and potassium titanate whiskers; conductive metal oxide such as titanium oxide; or polyphenylene derivatives, may be used.

The conductive agent may be included in an amount of 1 wt% or more, 20 wt% or less, 15 wt% or less, and 10 wt% or less based on the total weight of the solid content excluding the solvent in the slurry for a negative electrode.

The solvent may include water or an organic solvent, such as NMP (N-methyl-2-pyrrolidone), and may be used in an amount such that desirable viscosity is obtained when the negative electrode active material as well as optionally the binder and the conductive agent is included. For example, the solvent may be included in an amount such that a concentration of the solid content including the negative electrode active material as well as optionally the binder and the conductive agent is 50 wt% or more, 60 wt% or more, 70 wt% or more, 95 wt% or less, 90 wt% or less, and 85 wt% or less.

In a case in which the metal itself is used as the negative electrode, the negative electrode may be a metal thin film itself or may be prepared by a method in which the metal is physically bonded, rolled, or deposited on the negative electrode current collector. As the deposition method, an electrical deposition method or a chemical vapor deposition method for the metal may be used.

For example, the metal thin film itself or the metal to be bonded/rolled/deposited on the negative electrode current collector may include one type of metal selected from the group consisting of lithium (Li), nickel (Ni), tin (Sn), copper (Cu), and indium (In) or an alloy of two types of metals.

### (3) Solid Electrolyte Layer

The solid electrolyte layer may further include a binder in addition to the solid electrolyte according to the present invention.

The binder is a component that assists in the binding between solid electrolyte particles. Examples of the binder may be polyvinylidene fluoride, polyvinyl alcohol, carboxymethylcellulose, starch, hydroxypropylcellulose, regenerated cellulose, polyvinylpyrrolidone, poly tetrafluoroethylene, polyethylene, polypropylene, an ethylene-propylene-diene monomer, a sulfonated ethylene-propylene-diene monomer, a styrene-butadiene rubber, a fluoro rubber, or various copolymers thereof.

The binder may be included in an amount of 0.1 wt% or more, 5 wt% or less, 3 wt% or less, and 2 wt% or less based on a total weight of the solid electrolyte layer.

The present invention provides a battery module including the all-solid-state battery as a unit cell and a battery pack including the battery module may be provided. Since the battery module and the battery pack include the secondary battery having high capacity, high rate capability, and high cycle characteristics, the battery module and the battery pack may be used as a power source of a medium and large sized device selected from the group consisting of an electric vehicle, a hybrid electric vehicle, a plug-in hybrid electric vehicle, and a power storage system.

Hereinafter, examples of the present invention will be described in detail in such a manner that it may easily be carried out by a person with ordinary skill in the art to which the present invention pertains. The invention may, however, be embodied in many different forms and should not be construed as being limited to the examples set forth herein.

### Examples and Comparative Examples

### Example 1

Li₂S powder, P₂S₅ powder, and LiCl powder were used as raw material powder. These powders were weighed to have a composition of Li₆PS₅Cl and a total weight of 5 g. A total of 30 g of ZrO₂ balls with diameters of 5 mm and 10 mm (zirconia balls, 15 g each) were added to a 45 ml ZrO₂ (zirconia) container at a ratio of 1:1, and subsequently, 5 g of the raw material powder and 0.125 g of xylene (2.5 wt% based on a total precursor powder content) were added together. Ball milling was performed by a planetary mill at 400 rpm for 3 hours using high-energy ball milling equipment (equipment name: Pulverisette 7 premium by FRITSCH GmbH), and a powder material having a composition of Li₆PS₅Cl, which had been obtained from the ball milling, was dried in a vacuum oven at 80°C for 2 hours. Thereafter, a heat treatment was performed again at 550°C for 12 hours to obtain a solid electrolyte powder material.

### Example 2

The same procedure as Example 1 was performed except that 0.2 g of xylene (4 wt% based on the total precursor powder content) was added.

### Example 3

The same procedure as Example 1 was performed except that 0.125 g of hexane (2.5 wt% based on the total precursor powder content) was added.

### Comparative Example 1

The same procedure as Example 1 was performed except that xylene was not added.

### Comparative Example 2

The same procedure as Example 1 was performed except that 0.075 g of xylene (1.5 wt% based on the total precursor powder content) was added.

### Comparative Example 3

The same procedure as Example 1 was performed except that 0.075 g of hexane (1.5 wt% based on the total precursor powder content) was added.

### Comparative Example 4

The same procedure as Example 1 was performed except that 0.3 g of xylene (6 wt% based on the total precursor powder content) was added.

### Comparative Example 5

The same procedure as Example 1 was performed except that 0.125 g of tetrahydrofuran (2.5 wt% based on the total precursor powder content) was added.

### Experimental Example 1

Adhesion ratio measurement: After measuring a total amount of the solid electrolyte powder material added to the zirconia container in the above examples and comparative examples, ball milling was performed by a planetary mill, and subsequently, an amount of the solid electrolyte powder, which may be taken off by applying a pressure of 20 Kgf that did not damage the zirconia container using a tool such as a laboratory spoon, was measured to calculate a ratio of an amount of the powder adhered to an inner surface of the container to the total amount of the solid electrolyte powder material.

### Experimental Example 2

Ionic conductivity measurement: After 150 mg of Li₆PS₅Cl, the solid electrolytes prepared in the examples and the comparative examples, was added into a mold with a diameter of Φ 13 mm and a pressure of 370 MPa was then applied to form a solid electrolyte layer, ionic conductivity was measured at an amplitude of 10 mV and a measurement frequency range of 0.1 Hz to 7 MHz using a potentiostat (Biologic's SP-200) at room temperature (25°C).

### Experimental Example 3

Impurity ratio measurement: An impurity ratio of the solid electrolyte powder was calculated using X-ray diffraction (XRD) measurement and Rietveld refinement analysis. Bruker's D8 Endeavor with Cu Kα radiation at a wavelength of 1.5406 Å was used as XRD equipment, and a scan rate of 2 Deg/min and a 2 theta angle of 10 to 90 deg under non-atmospheric exposure were used as measurement conditions. Impurities were identified using a TOPAS Rietevld refinement program, and a ratio of the impurities was quantified.

### Experimental Example 4

Electronic conductivity measurement: After 150 mg of Li₆PS₅Cl, the solid electrolytes prepared in the examples and the comparative examples, was added into a mold with a diameter of Φ 13 mm and a pressure of 370 MPa was then applied to form a solid electrolyte layer, electronic conductivity was measured by measuring a current value after saturating a current such that there was no change in current by applying 1V DC for 6 hours at room temperature (25°C) using a potentiostat (Biologic's SP-200).

The adhesion ratio, ionic conductivity, impurity ratio, and electronic conductivity measured through Experimental Examples 1 to 4 are presented in Table 1 below.

**[Table 1]**

| Category | Solvent | Adhesion | Impurity | Ionic | Electroni |
|---|---|---|---|---|---|
| | | ratio (%) | ratio (%) | conductiv ity (mS/cm) | c conductiv ity (mS/cm) |
| Example 1 | 2.5 wt% of xylene | 0.2 | <1 (XRD not detected) | 6.23 | 1.6×10⁻⁷ |
| Example 2 | 4 wt% of xylene | 0.1 | <1 (XRD not detected) | 6.01 | 2.7×10⁻⁷ |
| Example 3 | 2.5 wt% of hexane | 0.3 | <1 (XRD not detected) | 5.94 | 1.3×10⁻⁷ |
| Comparative Example 1 | No solvent used | 99.9 | 8 | 3.25 | 1.8×10⁻⁷ |
| Comparative Example 2 | 1.5 wt% of xylene | 21.3 | 4 | 4.50 | 2.2×10⁻⁷ |
| Comparative Example 3 | 1.5 wt% of hexane | 31.8 | 5 | 4.41 | 1.6×10⁻⁷ |
| Comparative Example 4 | 6 wt% of xylene | 0.3 | 2 | 3.84 | 8.5×10⁻⁵ |
| Comparative Example 5 | 2.5 wt% of THF | 0.2 | 17 | 1.56 | 4.2×10⁻⁴ |

Referring to Table 1, it may be confirmed that Examples 1 to 3 had very low adhesion ratio and impurity ratio by adding a trace amount of the solvent with a relative polarity to water of 0.15 or less, and had excellent performance of the solid electrolyte due to high ionic conductivity and low electronic conductivity. Referring to FIG. 2, with respect to Example 1, it may be confirmed that a precursor mixture was prepared by mixing the precursors uniformly, and it may be confirmed that only 0.2% of the powder adhered to the container. In contrast, it may be confirmed that Comparative Example 1, which did not use a solvent, had very high adhesion ratio and impurity ratio, and, accordingly, it may be confirmed that performance was degraded due to low ionic conductivity of the solid electrolyte thus prepared. Referring to FIG. 2, with respect to Comparative Example 1, it may be confirmed that 99.9% of the powder in the prepared precursor mixture adhered to the container and was not transferred to the storage container. Also, it may be confirmed that Comparative Examples 2 to 4, in which the solvent was used outside the content range of the solvent of the present application, had very poor adhesion ratio and/or impurity ratio, and furthermore, had low ionic conductivity. Particularly, since Comparative Example 4 had a low ionic conductivity value and a high electronic conductivity value, it may be confirmed that it was unsuitable for use as a solid electrolyte. Furthermore, tetrahydrofuran has strong polarity, wherein, with respect to Comparative Example 5 in which tetrahydrofuran was added as a solvent rather than a solvent with a relative polarity to water of 0.15 or less, it may be confirmed that it was unsuitable for use as a solid electrolyte due to high impurity ratio, low ionic conductivity value, and high electronic conductivity value.

## Claims

1. A method of preparing a solid electrolyte, the method comprising steps of:
preparing a precursor mixture by mixing a sulfide-based solid electrolyte raw material and a solvent (S1); and
performing a heat treatment on the precursor mixture (S2),
wherein the solvent has a relative polarity to water of 0.15 or less, and
an amount of the solvent is greater than 2 wt% and less than or equal to 5 wt% based on a total amount of the precursor mixture.

2. The method of claim 1, wherein the solvent has a dielectric constant of 4.0 or less.

3. The method of claim 1, wherein the solvent is at least one selected from the group consisting of xylene, benzene, toluene, pentane, hexane, and cyclohexane.

4. The method of claim 1, wherein the amount of the solvent is in a range of 2.5 wt% to 4 wt% based on the total amount of the precursor mixture.

5. The method of claim 1, wherein the solid electrolyte is a sulfide-based solid electrolyte having an argyrodite-type crystal structure.

6. The method of claim 1, wherein the sulfide-based solid electrolyte raw material comprises a sulfur precursor, a phosphorus precursor, and a LiX precursor, wherein X is a halogen element.

7. The method of claim 1, wherein the sulfide-based solid electrolyte raw material comprises Li₂S, P₂S₅, and LiX, wherein X is chlorine (Cl), bromine (Br), or iodine (I).

8. The method of claim 1, wherein the step (S1) is performed by ball milling the sulfide-based solid electrolyte raw material and the solvent using a planetary mill containing two types of zirconia (Zr) balls having different average particl e diameters.

9. The method of claim 1, wherein the precursor mixture prepared in the step (S1) is in a form of powder.

10. The method of claim 1, wherein a heat treatment temperature in the step (S2) is in a range of 350°C to 650°C.

11. The method of claim 1, wherein an adhesion ratio, which is calculated by Equation 1, of the precursor mixture heat-treated in the step (S2) is 1% or less. Adhesion ratio (%) = (an amount (g) of precursor mixture powder which adheres to an inner surface of a container after a milling process and does not fall when the container is turned upside down after taking off the precursor mixture powder by applying a force of 20 Kgf or less/a total amount (g) of the precursor mixture added into the container) × 100

12. The method of claim 1, wherein the solid electrolyte is represented by Formula 1.
[Formula 1] LiₐM_{b}P_{c}S_{d}Aₑ
wherein, in Formula 1,
M is at least one element selected from the group consisting of silicon (Si), germanium (Ge), tin (Sn), aluminum (Al), zirconium (Zr), zinc (Zn), arsenic (As), gallium (Ga), antimony (Sb), niobium (Nb), vanadium (V), titanium (Ti), hafnium (Hf), magnesium (Mg), indium (In), copper (Cu), thallium (Tl), lead (Pb), tungsten (W), and nickel (Ni),
A is at least one element selected from the group consisting of fluorine (F), chlorine (Cl), bromine (Br), and iodine (I), and
5.5≤a≤7.0, 0≤b≤0.7, 0.3≤c≤1, 4≤d≤5.6, and 0.4≤e≤2.

13. A solid electrolyte having a composition represented by Formula 1 and
having a total impurity content of 1 wt% or less:
[Formula 1] LiₐM_{b}P_{c}S_{d}Aₑ
wherein, in Formula 1,
M is at least one element selected from the group consisting of silicon (Si), germanium (Ge), tin (Sn), aluminum (Al), zirconium (Zr), zinc (Zn), arsenic (As), gallium (Ga), antimony (Sb), niobium (Nb), vanadium (V), titanium (Ti), hafnium (Hf), magnesium (Mg), indium (In), copper (Cu), thallium (Tl), lead (Pb), tungsten (W), and nickel (Ni),
A is at least one element selected from the group consisting of fluorine (F), chlorine (Cl), bromine (Br), and iodine (I), and
5.5≤a≤7.0, 0≤b≤0.7, 0.3≤c≤1, 4≤d≤5.6, and 0.4≤e≤2.

14. The solid electrolyte of claim 13, wherein the solid electrolyte has an ionic conductivity of 5.0 mS/cm or more.

15. The solid electrolyte of claim 13, wherein the solid electrolyte has an electronic conductivity of 1.0×10⁻⁹ mS/cm to 5.0×10⁻⁶ mS/cm.
